# EUROPEAN PATENT APPLICATION

(11) **EP 2 597 814 A1**
(43) Date of publication of application: **29.05.2013**
(21) Application number: 10854959.3
(22) Date of filing: 16.12.2010
(51) Int. Cl.: H04L 12/24

(54) **ABNORMALITY ALARM METHOD AND SERVICE NODE FOR INTELLIGENT HOME SYSTEM**

(30) Priority: 22.07.2010 CN 201010238699
(71) Applicant: ZTE Corporation, Shenzhen, Guangdong 518057 (CN)
(72) Inventor: TANG, Guojun, Guangdong 518057 (CN); ZHAO, Changjun, Guangdong 518057 (CN)
(74) Representative: Zinkler, Franz
(86) International application number: PCT/CN2010/079895
(87) International publication number: WO 2012/009929

(57) **Abstract**

The present invention provides an abnormality alarm method and a service node for an intelligent home system, wherein the abnormality alarm method for the intelligent home system comprises: a service node of the intelligent home system receiving abnormality alarm information of a terminal of the intelligent home system (S202), wherein the abnormality alarm information is used to indicate that an abnormality occurs in the terminal; the service node performing an alarm operation for the abnormality alarm information according to an abnormality alarm processing policy (S204). The present invention solves the problem that the intelligent home terminal which can not support a short message mechanism or access a radio network can not give an alarm to a home owner in time, and achieves the effect that the abnormality alarm of all terminals of the intelligent home system can be notified to the home owner.

## Description

### Technical Field

The present invention relates to the technical field of an Internet of things, and in particular to an abnormality alarm method and a service node for an intelligent home system.

### Background

M2M, short for Machine-to-Machine/Man, is a networked application and service with an intelligent interaction among machine terminals as a core. The M2M provides a comprehensive informationalized solution for customers by embedding a radio communication module into a machine and by taking radio communications as access means, so as to meat informatization requirements of customers on monitoring, commanding and scheduling, data collection and measurement and the like.

With a better development of an information industry, an intelligent home establishes a connection with various ubiquitous services through a converged network environment and acquires various services through a standardized service interface provided by a unified service support platform. The intelligent home can provide simple and reliable operations implemented by a plurality of operating terminals, such as a touch screen, a multi-function remote controller, a cell phone and the like, so that an internal home management and an external communication can be effectively accomplished.

According to security requirements of the intelligent home, an intelligent home system is required to give alarm information such as a terminal failure alarm in time when having a failure or encountering a deliberate damage. When a terminal encounters a failure, failure information can be notified to a home owner.

At present, the terminal sending the alarm information to the home owner mainly is realized by enabling the terminal of the intelligent home system to support a short message mechanism and access a radio network. However, due to a limit in functions executed by different terminals, and in consideration of costs, some terminals in the intelligent home system can not support the short message mechanism or access the radio network. Consequently, when an abnormality occurs in the terminal and it is badly needed to notify the home owner, the terminal can not access the radio network to send a short message to the home owner; as a result, the home owner can not process an emergency alarm and thus suffers loss.

### Summary

The present invention provides an abnormality alarm method and a service node for an intelligent home system based on an Internet of things, so as to at least solve a problem that an intelligent home terminal which can not support a short message mechanism or access a radio network can not give an alarm to a home owner in time.

According to one aspect of the present invention, an abnormality alarm method for an intelligent home system is provided, which comprises: a service node of the intelligent home system receiving abnormality alarm information of a terminal of the intelligent home system, wherein the abnormality alarm information is used to indicate that an abnormality occurs in the terminal; the service node performing an alarm operation for the abnormality alarm information according to an abnormality alarm processing policy.

Preferably, the step of the service node performing the alarm operation for the abnormality alarm information according to the abnormality alarm processing policy comprises: the service node determining an abnormality alarm type to which the abnormality alarm information belongs, and performing the alarm operation for the abnormality alarm information according to the abnormality alarm processing policy corresponding to the abnormality alarm type to which the abnormality alarm information belongs.

Preferably, the step of performing the alarm operation for the abnormality alarm information according to the abnormality alarm processing policy corresponding to the abnormality alarm type to which the abnormality alarm information belongs comprises: the service node performing the alarm operation for the abnormality alarm information according to the abnormality alarm processing policy corresponding to the abnormality alarm type with a highest priority in the abnormality alarm type to which the abnormality alarm information belongs.

Preferably, the abnormality alarm type is set according to at least one of the following ways: set based on a terminal model, set based on a home, set based on an area, set based on a service, set based on an application corresponding to the terminal, set based on a terminal number, set based on an International Mobile Subscriber Identity (IMSI), and set based on an International Mobile Equipment Identity (IMEI).

Preferably, the step of the service node performing the alarm operation for the abnormality alarm information according to the abnormality alarm processing policy comprises: the service node judging whether the abnormality alarm information satisfies at least one of the following conditions: a message type of the abnormality alarm information satisfies a set message type, an event code of the abnormality alarm information satisfies a set alarm code, and information in the abnormality alarm information satisfies a set alarm expression; if so, performing the alarm operation for the abnormality alarm information according to the abnormality alarm processing policy.

Preferably, the service node comprises at least one of: a service gateway of a network side, a service control platform of the network side, a service gateway of a home side, a service control platform of the home side, and a third-party application.

Preferably, the abnormality alarm processing policy comprises at least one of: notifying via a short message, storing to a database, notifying via an instant message, notifying via an Email, and notifying via an automatic telephone voice.

According to another aspect of the present invention, a service node for an intelligent home system is provided, which comprises: a receiving module, which is configured to receive abnormality alarm information of a terminal of the intelligent home system, wherein the abnormality alarm information is used to indicate that an abnormality occurs in the terminal; an alarm module, which is configured to perform an alarm operation for the abnormality alarm information according to an abnormality alarm processing policy.

Preferably, the alarm module comprises: a type-based alarm module, which is configured to determine an abnormality alarm type to which the abnormality alarm information belongs, and perform the alarm operation for the abnormality alarm information according to the abnormality alarm processing policy corresponding to the abnormality alarm type to which the abnormality alarm information belongs.

Preferably, the alarm module further comprises: a condition judgment module, which is configured to judge whether the abnormality alarm information satisfies at least one of the following conditions: a message type of the abnormality alarm information satisfies a set message type, an event code of the abnormality alarm information satisfies a set alarm code, and information in the abnormality alarm information satisfies a set alarm expression; an execution module, which is configured to perform the alarm operation for the abnormality alarm information according to the abnormality alarm processing policy if a judgment result of the condition judgment module is that the abnormality alarm information satisfies at least one of the conditions.

Preferably, the service node comprises at least one of the following: a service gateway of a network side, a service control platform of the network side, a service gateway of a home side, a service control platform of the home side, and a third-party application.

Preferably, the abnormality alarm processing policy comprises at least one of: notifying via a short message, storing to a database, notifying via an instant message, notifying via an Email, and notifying via an automatic telephone voice.

With the present invention, the service node in the entire intelligent home system network is employed to receive abnormality alarms of terminals uniformly, give an alarm and notify the home owner, thus the problem that the intelligent home terminal which can not support a short message mechanism or access the radio network can not give an alarm to the home owner in time is solved, and further more, the effect that the abnormality alarm of all terminals of the intelligent home system can be notified to the home owner is achieved, and meanwhile the number of network access points is reduced.

### Brief Description of the Drawings

Drawings, provided for further understanding of the present invention and forming a part of the specification, are used to explain the present invention together with embodiments of the present invention rather than to limit the present invention, wherein:
Fig. 1 shows a networking schematic diagram of an intelligent home system according to an embodiment of the present invention;
Fig. 2 shows a step flowchart of an abnormality alarm method for an intelligent home system according to Embodiment 1 of the present invention;
Fig. 3 shows a step flowchart of an abnormality alarm method for an intelligent home system according to Embodiment 2 of the present invention;
Fig. 4 shows a step flowchart of an abnormality alarm method for an intelligent home system according to Embodiment 3 of the present invention; and
Fig. 5 shows a structural block diagram of a service node for an intelligent home system according to Embodiment 4 of the present invention.

### Detailed Description of the Embodiments

The present invention is described below in detail by reference to the accompanying drawings in conjunction with embodiments. It should be noted that the embodiments in the application and the characteristics of the embodiments can be combined if no conflict is caused.

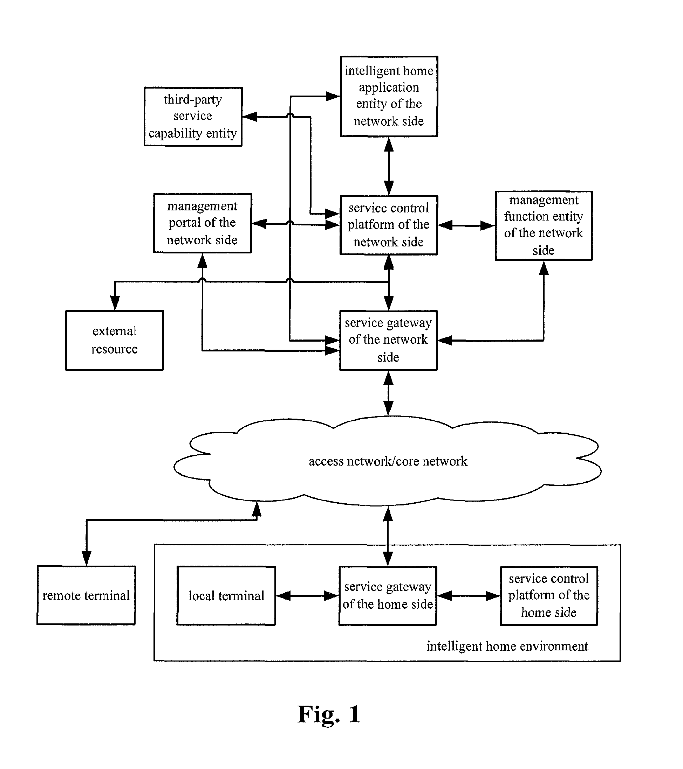

Referring to Fig. 1, a networking schematic diagram of an intelligent home system according to an embodiment of the present invention is shown.

The intelligent home system in the embodiment comprises a home side part, a network side part, an access network/core network, and a remote terminal.

The home side part comprises a local terminal, a service gateway of the home side and a service control platform of the home side. The local terminal is a terminal of the intelligent home system in a home, such as a washing machine, a microwave and the like. The service gateway of the home side completes external communications and internal communications, and the service gateway of the home side comprises three aspects, namely, communication function, function engine and application function. The service control platform of the home side implements functions such as communication, terminal control, terminal management, information storage and the like.

The network side part comprises a service gateway of a network side, a service control platform of the network side, a management function entity of the network side, an intelligent home application entity of the network side, a management portal of the network side, a third-party service capability entity and the like. The service gateway of the network side implements the access of an intelligent home service to a service support platform in response to a request of the intelligent home service, and implements information transmission of an intelligent home application and so on. The service gateway of the network side comprises three layers, namely, communication function, function engine and application function. The service control platform of the network side and the management function entity of the network side provide a service execution environment, provide a service capability interface, provide various service capabilities such as charging for various intelligent home applications, provide presenting and cooperation capability, and provide a core management function for the entire system. The intelligent home application entity of the network side is a third-party application. The management portal of the network side realizes related functions for managing the service control platform and the service gateway from a portal. The third-party service capability entity is a third-party self-defined service application in the intelligent home network.

The home side part accesses a network through the access network/core network to associate with the network side part. The remote terminal also accesses the network through the access network/core network and acquires the alarm information of a terminal of the home side from the network side.

In the intelligent home system of this embodiment, when encountering an abnormality alarm, each terminal can send alarm information to one or more of the service nodes such as the service gateway of the network side, the service control platform of the network side, the service gateway of the home side, the service control platform of the home side and the third-party application; then the service node performs an alarm operation for the alarm information uniformly. For a terminal which can not support a short message mechanism or access a radio network, when a risk appears and an alarm is needed, the terminal can notify a service node of the alarm information, which then accesses the network and notifies a home owner. Therefore, a terminal alarming through the service node is realized, so that the home owner of the intelligent home system acquires the alarm information in time, processes the emergency in time and avoids loss.

### Embodiment 1

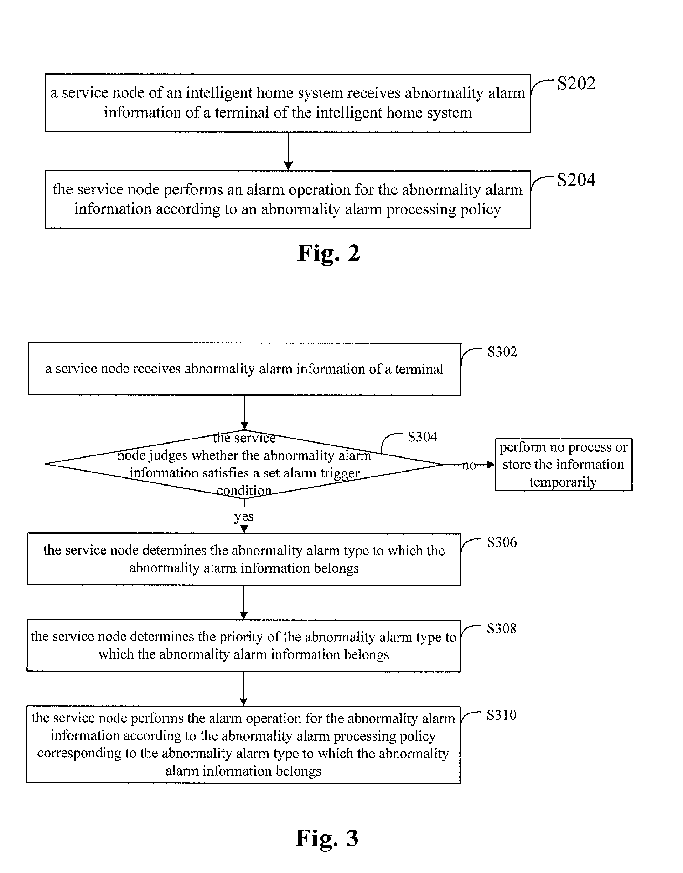

Referring to Fig. 2, a step flowchart of an abnormality alarm method for an intelligent home system according to the Embodiment 1 of the present invention is shown, which comprises the steps as follows.

Step S202: a service node of the intelligent home system receives abnormality alarm information of a terminal of the intelligent home system.

The abnormality alarm information is used to indicate that an abnormality occurs in the terminal, for example, natural gas leakage or electricity shortage of a water heater.

The service node can be a node having a service processing capability in the intelligent home system, such as a gateway, a control platform, a management platform and a third-party application and the like. This embodiment can be implemented on different types of service nodes, and thus makes full use of existing network equipment, saves cost and realizes higher compatibility.

Step S204: the service node performs an alarm operation for the abnormality alarm information according to an abnormality alarm processing policy.

In this step, the abnormality alarm processing policy is regulated on the service node, so that different alarm operations, for example, notifying a home owner via a short message and the like, can be performed for different alarm information.

In a related art, some terminals in the intelligent home system can not support the short message mechanism or access the radio network, thus, when an emergent abnormal event occurs, the home owner can not be notified in time and thus suffers loss. Through this embodiment, the service node performs the alarm operation for alarm information of the terminal uniformly; when the terminal has an emergent abnormal event occurred and can not access the network to notify the home owner, the service node accesses the network and notifies the home owner of the alarm information of the terminal in time, so that the home owner processes the emergent abnormal event in time. Moreover, compared with the access of the terminal to the network, the access of the service node to the network greatly reduces the number of network access points because a plurality of terminals can access the network using one service node.

### Embodiment 2

Referring to Fig. 3, a step flowchart of an abnormality alarm method for an intelligent home system according to the Embodiment 2 of the present invention is shown, which comprises the steps as follows.

Step S302: a service node receives abnormality alarm information of a terminal.

In this embodiment, a service control platform of a network side is taken as the service node. Other types of service nodes can implement this embodiment by referring to the implementation of the service control platform of the network side.

The service control platform of the network side receives the abnormality alarm information of the terminal, for example, natural gas leakage.

Step S304: the service node judges whether the abnormality alarm information satisfies a set alarm trigger condition; if so, go to Step S306; otherwise, perform no process or store the information temporarily.

The alarm trigger condition is one or more of the following: a message type of the abnormality alarm information satisfies a set message type, an event code of the abnormality alarm information satisfies a set alarm code, and information in the abnormality alarm information satisfies a set alarm expression.

This embodiment takes judging whether the event code contained in the abnormality alarm information of the terminal satisfies the alarm code for example. The service node judges that the abnormality alarm information contains a code of natural gas leakage; then the service node compares this code with the set alarm code and determines that the abnormality alarm information satisfies the alarm trigger condition.

Step S306: the service node determines an abnormality alarm type to which the abnormality alarm information belongs.

The abnormality alarm type can be set according to at least one of the following ways: set based on a terminal model, set based on a home, set based on an area, set based on a service, set based on an application corresponding to the terminal, set based on a terminal number, set based on an International Mobile Subscriber Identity (IMSI), and set based on an International Mobile Equipment Identity (IMEI).

In this embodiment, all the above ways are adopted to set the abnormality alarm type, thus the abnormality alarm type of this embodiment totally comprises 8 types. The service node determines that the abnormality alarm information of this embodiment belongs to the type set based on the terminal model and the type set based on the home simultaneously.

Step S308: the service node determines a priority of the abnormality alarm type to which the abnormality alarm information belongs.

This embodiment takes the type set based on the terminal model being prior to the type set based on the home in priority for example.

Step S310: the service node performs an alarm operation for the abnormality alarm information according to the abnormality alarm processing policy corresponding to the abnormality alarm type to which the abnormality alarm information belongs.

In this embodiment, taking the processing policy corresponding to the type set based on the terminal model being "notify the home owner automatically via a telephone voice", and the processing policy corresponding to the type set based on the home being "notify the home owner via an instant message" for example, then the service node first dials a set number of the home owner and notifies the home owner that an abnormality occurs in the terminal via a voice call, and then the service node sends an instant message to the number of the home owner to notify again that the abnormality occurs in the terminal.

It should be noted that this embodiment only takes the service node being the service control platform of the network side for example, that is, the entire intelligent home system uses one service node to process the abnormality alarm information, to illustrate the principle of the embodiment of the present invention. However, those skilled in the art should understand that, in one intelligent home system, several different service nodes can be employed to process the abnormality alarm information of same or different terminals, wherein the employed service nodes can be of the same type, for example, all the service nodes are the service control platforms of the network side; or the employed service nodes can be of different types, for example, one type is the service control platform of the network side, another type is the service gateway of the network side or of the home side and the like. Those skilled in the art can set the service nodes according to actual requirements and this is not limited in the present invention.

### Embodiment 3

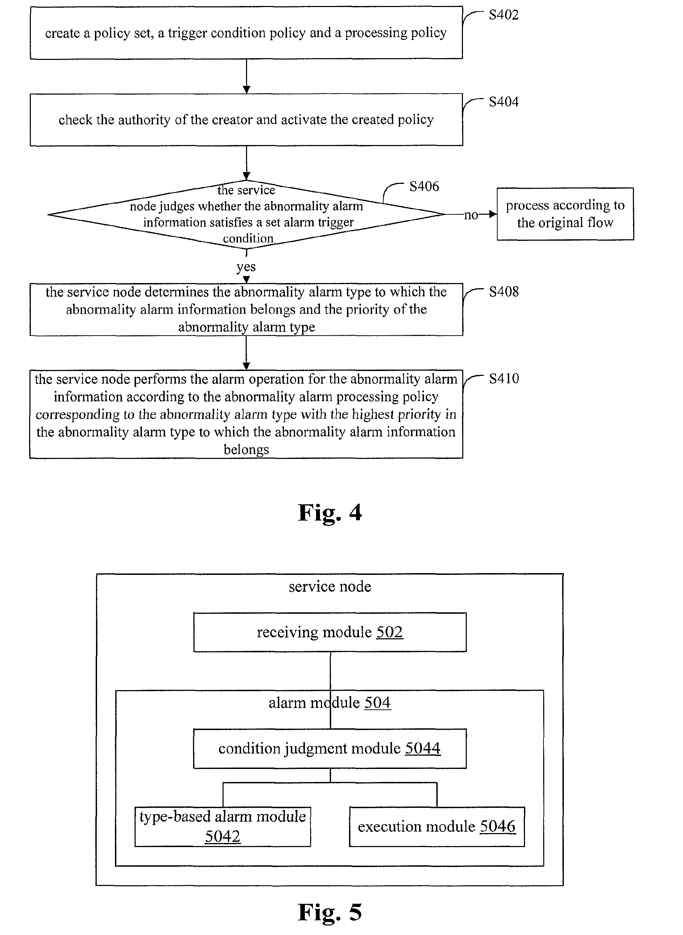

Referring to Fig. 4, a step flowchart of an abnormality alarm method for an intelligent home system according to the Embodiment 3 of the present invention is shown, which comprises the steps as follows.

Step S402: an administrator of the intelligent home system creates a policy set (that is, abnormality alarm types), a trigger condition policy and a processing policy through a service node; or, a home owner creates a policy set, a trigger condition policy and a processing policy by logging to a portal.

The administrator of the intelligent home system has relatively greater authority and can perform setting operations, comprising creation, modification, deletion and the like, on each policy. The administrator also is responsible for allocating and setting authorities for the user of the home owner, wherein the account number allocated to the user of the home owner has an authority limit, and the account number can be classified into two types, namely, user needing verification and user needing no verification. The user can set the alarm of his/her home only, but can not set the alarm of other homes.

The operation of each creation is described as follows.

### A. creation of a policy set, that is, abnormality alarm types, wherein the types are classified based on:

(1) terminal model: the same model of terminals; (2) home: all terminals in the home; (3) area: division according to regions; (4) service division: corresponding usage division, for example, illumination, TV, washing machine and so on; (5) application corresponding to the terminal: one type of corresponding application relationship on a control platform or service gateway; (6) terminal number: identification code for uniquely identifying one terminal; (7) IMSI; (8) IMEI; (9) self-defined group: exporting any terminal or the above types to one group. If one terminal belongs to different types simultaneously, it is determined which type/types is/are adopted based on the priority of the types to which the terminal belongs.

One terminal might belong to one type only, also might belong to a plurality of types simultaneously.

After the policy set is classified according to the above types, the user of the home owner can set the alarms based on the home and the terminal number only; while the administrator of the intelligent home system can set the policy set of all conditions, wherein the types can be in an NAND relationship (for example, the terminal model is included but a certain home is not included), moreover, the priority of the type can be set when the type is set.

Through the classification of types, it is convenient to manage the abnormality alarm information.

### B. creation of a trigger condition policy

When the abnormality alarm information satisfies one or more of the following conditions, triggering is conducted. Preferably, the trigger condition also can be set with a priority; when the abnormality alarm information satisfies one or more of the following conditions, triggering is conducted based on the priority of the condition.

The trigger condition comprises: (1) a trigger command word, that is, a command word, which is used for distinguishing the type of protocol messages, of a message; (2) a terminal alarm code or event code; (3) a logic expression of a group of TLV (Tag, Length, Value), wherein the logic expression is edited by selecting Tag, Operator (>, >=, <, <=, !=, ==) and filling Value; after the comparison operation of each Tag, the administrator can select "And", "Or" operations, and meanwhile can set the priority of each operator of the plurality of operators in the trigger conditions; (4) for all the above trigger conditions, or for a single trigger condition, or for a single logic expression in a single trigger condition, a trigger time is set, that is, the period of the trigger condition taking effect.

### C. creation of a processing policy

The processing policy is the way adopted to process the abnormality alarm information after the trigger condition is triggered for the abnormality alarm information. The processing policy can be set for all alarm information of all abnormality alarm types meeting the trigger condition, also can be set for all alarm information of all abnormality alarm types meeting a single trigger condition, and also can be set for a single abnormality alarm type meeting the trigger condition. A plurality of processing ways can be set for the alarm information meeting one trigger condition.

The processing result comprises: (1) notification via a short message; (2) recording to a database for storage, wherein the database can be located at a service node of the network side, or can be located at a service node of the home side; (3) notification via an instant communication message; (4) notification via an Email; (5) notification via an automatic telephone voice; (6) notification via a multimedia message.

The plurality of processing policies guarantees the flexibility of processing the abnormality alarm information.

Step S404: the intelligent home system checks the authority of the creator and activates the created policy.

After the policy set, the trigger condition policy and the processing policy are created, the intelligent home system checks the authority of the creator and judges whether it is needed to perform a higher-level examination and approval, if the higher-level examination and approval is needed, the intelligent home system triggers and activates each created policy after the examination and approval succeeds; if the higher-level examination and approval is not needed, the intelligent home system directly activates the created policies. When activating the policies, the intelligent home system can select the service node with the policy taking effect, such as a service gateway, a control platform, a home control gateway, a home management platform, a third-party application and the like. After the policies are activated, each created policy takes effect at the activated service node.

Step S406: the activated service node receives the abnormality alarm information of the terminal and judges whether the abnormality alarm information satisfies the set alarm trigger condition; if so, go to Step S408; otherwise, process according to the original flow.

This embodiment takes the trigger condition satisfying a set trigger command word for example, that is, the message type of the abnormality alarm information satisfies a set message type. After the service node receives the abnormality alarm information of the terminal, the service node performs matching on the message according to the trigger condition of the trigger condition policy and judges whether to trigger an alarm. For the message matched successfully, the service node performs corresponding processes according to the processing policy; for the message matched unsuccessfully, the service node performs processes according to the original flow directly (for example, the terminal which can support the short message mechanism and access the radio network informs the home owner directly).

If the abnormality alarm information satisfies a plurality of trigger conditions of the trigger condition policy, the trigger condition can be selected according to the priority of the trigger condition policy.

The method of only performing the alarm operation for the alarm information satisfying the alarm trigger condition according to the processing policy guarantees the alarm processing efficiency of the system.

Step S408: the service node determines the abnormality alarm type to which the abnormality alarm information belongs and the priority of the abnormality alarm type to which the abnormality alarm information belongs.

This embodiment still takes the service node determining that the abnormality alarm information belongs to the type set based on the terminal model and the type set based on the home simultaneously for example, wherein the type set based on the terminal model is prior to the type set based on the home in priority.

Step S410: the service node performs the alarm operation for the abnormality alarm information according to the abnormality alarm processing policy corresponding to the abnormality alarm type with the highest priority in the abnormality alarm type to which the abnormality alarm information belongs.

This embodiment takes the processing policy corresponding to the type set based on the terminal model being "record in a database for storage", and the processing policy corresponding to the type set based on the home being "notify the home owner via a short message" for example. The service node judges that the type set based on the terminal model is prior to the type set based on the home in priority, then stores the alarm information in a database according to the processing policy corresponding to the type set based on the terminal model, wherein the database can be located at this local service node or can be located at other service nodes, for example, the service node of the home side, so that the home owner can check the alarm information conveniently. Through the priority of the abnormality alarm type, the more emergent alarm type is set to be of a higher priority, so that the emergent alarm information can be processed preferentially and in time.

Through the embodiments above, refined alarms are set at a service node according to customization requirements so that different processes can be performed for different alarms. In this way, for a home owner, when the terminal of the intelligent home system has an abnormality, for example, when some relatively more emergent event such as natural gas leakage or doors and windows suffering damage occurs, it is probably needed to notify via a short message, even via an automatic ringing service, while when some not so emergent event such as electricity shortage of water heater occurs, it is only needed to record the information into a database or a home display apparatus.

After triggering an alarm, the terminal of the intelligent home system sends the alarm information to a service node, such as the service gateway, the control platform and the like. The service node determines different alarm ways for the specific alarm, and performs matching according to the alarm content and determines a final alarm processing way, thereby achieving more accurate and more humanized alarm processing. Moreover, adopting a unified node to give an alarm reduces the number of network access points and meanwhile increases the compatibility of the terminal.

### Embodiment 4

Referring to Fig. 5, a structure diagram of a service node for an intelligent home system according to Embodiment 4 of the present invention is shown, which comprises:
a receiving module 502, which is configured to receive abnormality alarm information of a terminal of the intelligent home system, wherein the abnormality alarm information is used to indicate that an abnormality occurs in the terminal; and an alarm module 504, which is configured to perform an alarm operation for the abnormality alarm information according to an abnormality alarm processing policy.

Preferably, the service node comprises at least one of the following: a service gateway of a network side, a service control platform of the network side, a service gateway of a home side, a service control platform of the home side, and a third-party application.

Preferably, the abnormality alarm processing policy comprises at least one of the following: notifying via a short message, storing to a database, notifying via an instant message, notifying via an Email, and notifying via an automatic telephone voice.

Preferably, the alarm module 504 comprises: a type-based alarm module 5042, which is configured to determine an abnormality alarm type to which the abnormality alarm information belongs, and perform the alarm operation for the abnormality alarm information according to the abnormality alarm processing policy corresponding to the abnormality alarm type to which the abnormality alarm information belongs.

Preferably, the type-based alarm module 5042 is configured to determine the abnormality alarm type to which the abnormality alarm information belongs, and perform the alarm operation for the abnormality alarm information according to the abnormality alarm processing policy corresponding to the abnormality alarm type with a highest priority in the abnormality alarm type to which the abnormality alarm information belongs.

Preferably, the abnormality alarm type is set according to at least one of the following ways: set based on a terminal model, set based on a home, set based on an area, set based on a service, set based on an application corresponding to the terminal, set based on a terminal number, set based on an IMSI, set based on an IMEI.

Preferably, the alarm module 504 further comprises: a condition judgment module 5044, which is configured to judge whether the abnormality alarm information satisfies at least one of the following conditions: a message type of the abnormality alarm information satisfies a set message type, an event code of the abnormality alarm information satisfies a set alarm code, and information in the abnormality alarm information satisfies a set alarm expression; and an execution module 5046, which is configured to perform the alarm operation for the abnormality alarm information according to the abnormality alarm processing policy if a judgment result of the condition judgment module 5044 is that the abnormality alarm information satisfies at least one of the above conditions.

Preferably, an alarm trigger condition comprises: the message type of the abnormality alarm information satisfies the set message type, the event code of the abnormality alarm information satisfies the set alarm code, and the information in the abnormality alarm information satisfies the set alarm expression.

Preferably, the service node of the embodiment further comprises: a setting module, which is configured to set a policy set (that is, abnormality alarm types), a trigger condition policy and a processing policy.

For example, the policy set, the trigger condition policy and the processing policy are set through the setting module first. The types of objects needing to be triggered are filled in the policy set, wherein the type can be set according to the terminal model, the home, the area, the service division, the application corresponding to the terminal, the terminal number, the IMSI and the IMEI; and the types are in an NAND relationship. The trigger condition policy can be set according to a trigger command word, an alarm code or an event code of the terminal, and a logic expression of a group of TLV. The processing policy can be set as notifying via a short message, recording into a database for storage, notifying via an instant message, notifying via an Email, notifying via a telephone voice and so on.

After the receiving module 502 of the service node receives the abnormality alarm information of the terminal of the intelligent home system, the condition judgment module 5044 of the alarm module 504 judges whether the abnormality alarm information satisfies the set alarm trigger condition. In the condition that the abnormality alarm information satisfies the set alarm trigger condition, the execution module 5046 performs the alarm operation for the abnormality alarm information according to the abnormality alarm processing policy; or, the type-based alarm module 5042 determines the abnormality alarm type to which the abnormality alarm information belongs, and performs the alarm operation for the abnormality alarm information according to the abnormality alarm processing policy corresponding to the abnormality alarm type to which the abnormality alarm information belongs, preferably, corresponding to the abnormality alarm type with the highest priority in the abnormality alarm type to which the abnormality alarm information belongs.

From the description above, it can be seen that the intelligent home system of the ubiquitous network provided by the embodiment of the present invention matches the created policy after the service node checks the abnormality alarm information, determines the processing way according to the matched result, and determines the combination of several provided trigger conditions and the corresponding processing way to combine into a management processing way of alarms, thereby providing a more reasonable and intelligent alarm service for the user of the intelligent home system.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

The descriptions above are only the preferable embodiment of the present invention, which are not used to restrict the present invention. For those skilled in the art, the present invention may have various changes and variations. Any amendments, equivalent substitutions, improvements, etc. within the principle of the present invention are all included in the scope of the protection of the present invention.

## Claims

1. An abnormality alarm method for an intelligent home system, **characterized by** comprising:
a service node of the intelligent home system receiving abnormality alarm information of a terminal of the intelligent home system, wherein the abnormality alarm information is used to indicate that an abnormality occurs in the terminal;
the service node performing an alarm operation for the abnormality alarm information according to an abnormality alarm processing policy.

2. The method according to claim 1, **characterized in that** the step of the service node performing the alarm operation for the abnormality alarm information according to the abnormality alarm processing policy comprises:
the service node determining an abnormality alarm type to which the abnormality alarm information belongs, and performing the alarm operation for the abnormality alarm information according to the abnormality alarm processing policy corresponding to the abnormality alarm type to which the abnormality alarm information belongs.

3. The method according to claim 2, **characterized in that** the step of performing the alarm operation for the abnormality alarm information according to the abnormality alarm processing policy corresponding to the abnormality alarm type to which the abnormality alarm information belongs comprises:
the service node performing the alarm operation for the abnormality alarm information according to the abnormality alarm processing policy corresponding to the abnormality alarm type with a highest priority in the abnormality alarm type to which the abnormality alarm information belongs.

4. The method according to claim 3, **characterized in that** the abnormality alarm type is set according to at least one of the following ways: set based on a terminal model, set based on a home, set based on an area, set based on a service, set based on an application corresponding to the terminal, set based on a terminal number, set based on an International Mobile Subscriber Identity (IMSI), and set based on an International Mobile Equipment Identity (IMEI).

5. The method according to claim 1, **characterized in that** the step of the service node performing the alarm operation for the abnormality alarm information according to the abnormality alarm processing policy comprises:
the service node judging whether the abnormality alarm information satisfies at least one of the following conditions: a message type of the abnormality alarm information satisfies a set message type, an event code of the abnormality alarm information satisfies a set alarm code, and information in the abnormality alarm information satisfies a set alarm expression;
if so, performing the alarm operation for the abnormality alarm information according to the abnormality alarm processing policy.

6. The method according to any one of claims 1 to 5, **characterized in that** the service node comprises at least one of: a service gateway of a network side, a service control platform of the network side, a service gateway of a home side, a service control platform of the home side, and a third-party application.

7. A service node for an intelligent home system, **characterized by** comprising:
a receiving module, which is configured to receive abnormality alarm information of a terminal of the intelligent home system, wherein the abnormality alarm information is used to indicate that an abnormality occurs in the terminal;
an alarm module, which is configured to perform an alarm operation for the abnormality alarm information according to an abnormality alarm processing policy.

8. The service node according to claim 7, **characterized in that** the alarm module comprises:
a type-based alarm module, which is configured to determine an abnormality alarm type to which the abnormality alarm information belongs, and perform the alarm operation for the abnormality alarm information according to the abnormality alarm processing policy corresponding to the abnormality alarm type to which the abnormality alarm information belongs.

9. The service node according to claim 7 or 8, **characterized in that** the alarm module further comprises:
a condition judgment module, which is configured to judge whether the abnormality alarm information satisfies at least one of the following conditions: a message type of the abnormality alarm information satisfies a set message type, an event code of the abnormality alarm information satisfies a set alarm code, and information in the abnormality alarm information satisfies a set alarm expression;
an execution module, which is configured to perform the alarm operation for the abnormality alarm information according to the abnormality alarm processing policy if a judgment result of the condition judgment module is that the abnormality alarm information satisfies at least one of the conditions.

10. The service node according to claim 7 or 8, **characterized in that** the service node comprises at least one of the following: a service gateway of a network side, a service control platform of the network side, a service gateway of a home side, a service control platform of the home side, and a third-party application.
